# EUROPEAN PATENT APPLICATION

(11) **EP 1 276 109 A2**
(43) Date of publication of application: **15.01.2003**
(21) Application number: 02022817.7
(22) Date of filing: 06.05.1999
(51) Int. Cl.: G11B 27/034, G11B 27/32, H04N 5/781, G11B 20/12, G11B 27/10, G11B 19/12, G11B 7/00, H04N 5/85

(54) **Optical disk recording method, optical disk recording/reproducing method and a method of recording audio/video data**

(30) Priority: 27.06.1998 KR 9824554
(62) Divisional of application: 99303536.9
(71) Applicant: SAMSUNG ELECTRONICS CO., LTD., Suwon-City, Kyungki-do (KR)
(72) Inventor: Park, Pan-gie, Suwon-city, Kyunkgi-do (KR); Oh, Young-nam, Sungnam-city, Kyungki-do (KR); Chung, Tae-yun, Gwachun-city, Kyungki-do (KR); Kang, Jung-suk, Songpa-gu, Seoul (KR); Moon, Seong-jin, Seoul (KR)
(74) Representative: Chugg, David John

(57) **Abstract**

An apparatus and method for recording and reproducing audio and video data on a rewritable optical disk in real time, is provided. A disk recording medium, allowing a user to access recorded data at predetermined intervals, includes cells comprised of part of predetermined data and set as reproduction and recording units, and information on position from the start of the cells to a specific position. This method includes the step of constituting a cell of part of the recorded audio and video data, constituting a program of the one or more cells, constituting a part of title (PTT) of a specific portion of the recorded audio and video data, and then recording the information on the cell, the program, and the PTT on the disk.

## Description

The present invention relates to an optical disk recording/reproducing apparatus and a method thereof, and more particularly, to an apparatus and method of recording/reproducing audio and video data on a rerecordable optical disk in real time.

A typical digital video disc (DVD) read only memory (ROM) video player reproduces audio and video data using a disk.

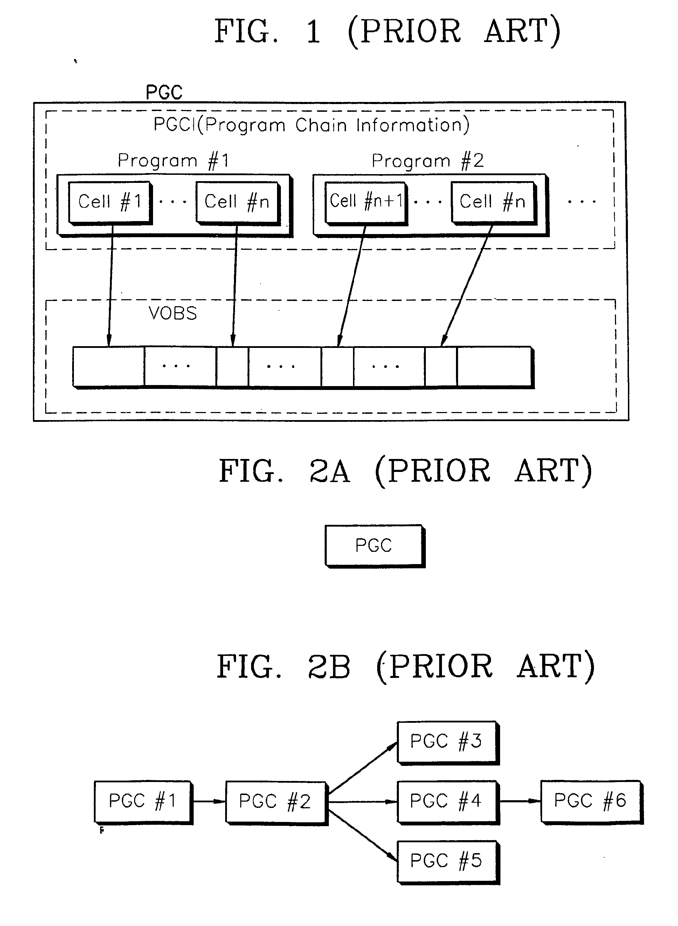

A DVD ROM video format, as shown in Figure 1, is comprised of program chains (PGC), programs, and cells for logically dealing with data, and video objects (VOBS) in which audio and video data has been recorded.

If a movie has been recorded into first and last volumes, the entire movie is represented by a PGC, and the first and second volumes each can be represented by programs. Also, each of the programs can be divided into several small units, cells, in consideration of a random access, and data included in each cell exists in a partial area of VOBS.

A manufacturer, who manufactures data in the DVD ROM video format, constitutes original audio and video data items in forms of the PGC, the program, and the cell and provides the result to users.

As shown in Figure 1, program chain information (PGCI) is the connection information of several programs, and VOBS is a video object (VOB) collection in which actually-compressed audio and video data items have been recorded. One or more programs exist in one PGCI, and one program is comprised of a collection of one or more cell units. Each cell is a sort of recording/reproducing unit, and audio and video data exists in the VOBS. The PGCI has only program information such as the position of audio and video data or the recording/reproducing time existing in the VOBS. The VOB in the VOBS is subdivided into video object units (VOBU) which are used as random access units of a disk recording/reproducing apparatus. In general, the VOBU is constituted of motion picture experts group (MPEG) video data and audio data multiplexed in units of a sector.

The relationship between the title and the PGC in a DVD-ROM video will now be described. For example, a title can correspond to an entire movie, and is the largest unit of a data structure from a user's standpoint. When a manufacturer, manufacturing the DVD-ROM video disk with such a title, forms a data structure, one PGC may comprise one title as shown in Figure 2A, or several PGCs comprise one title as shown in Figure 2B according to the manufacturer's intention. When the title constituted as shown in Figure 2B is reproduced in sequence, PGC#1 and PGC#2 are reproduced, one of PGC#3, PGC#4, and PGC#5 is selected and reproduced, and finally PGC#6 is reproduced. Here, PGC#3, PGC#4, and PGC#5 may have different contents, or may have different editions of the same content.

From a user's standpoint, the title has such a large concept that it can be divided into several chapters or parts of title (PTT) to allow a scene to rapidly jump to the next scene. In the case of a music CD, an entire collection of songs recorded in the CD correspond to one title, and each of the songs corresponds to the chapter or PTT. The programs and cells are reproduction and recording units determined by a user according to the properties of data. In the PGC corresponding to a title concept, the PTT is divided by the content of data and logically provided to the user.

The PTT also has its own information in the form of a PTT search pointer table among areas of information on the title.

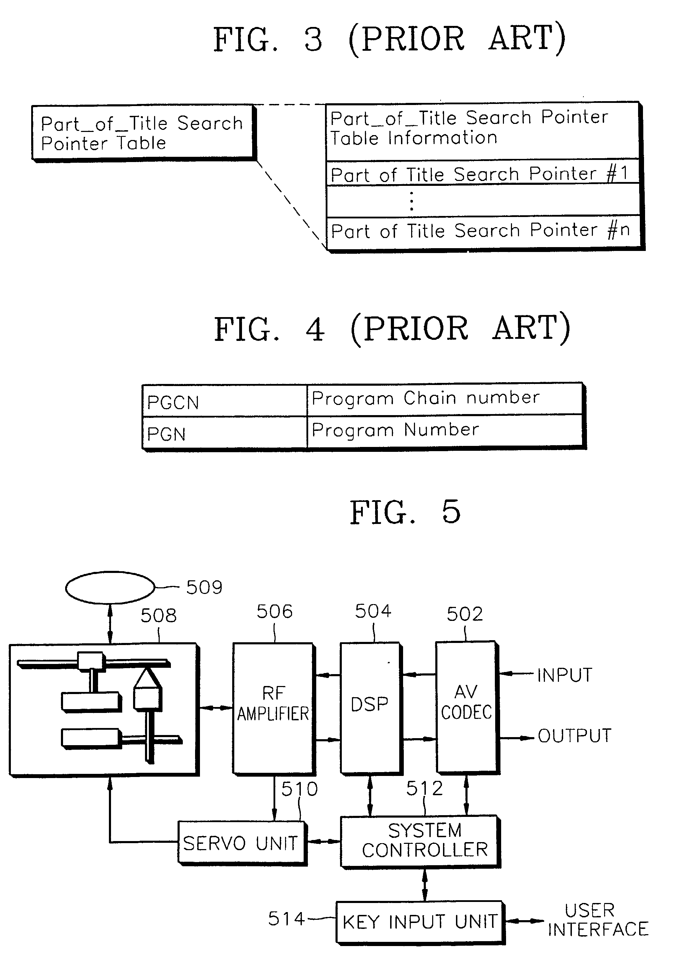

A PTT search pointer table shown in Figure 3 is comprised of a PTT search pointer table information area, and PTT search pointers existing in a title. Here, the PTT search pointer table information area has information on the number of PTT pointers. Each of the PTT search pointers indicates a point of time when a PTT starts, and is comprised of a program chain number (PGCN) and a program number (PGN). Here, the PGCN represents the number of a program chain (PGC) to which the PTT pertains, and the PGN represents the number of a program in the PGC. A lot of PTT information is moved from a current position, where PTT information is being reproduced, to the next PTT, and then is reproduced, when a user has received the next PTT command via an external input device.

In the DVD-ROM video format, the programs constituting a PGC as shown in Figure 1 are consistent with the content actually recorded on a disk. That is, an area in a specific range is constituted of programs through a special manufacturing process on the basis of the contents recorded on the disk, and a specific program can be defined to be selected from the several programs and used as PTT. Also, the program units are divided in accordance with the contents of recorded data, so that the PTT information can use the program units. However, in an apparatus for recording/reproducing audio and video data in real time, units such as programs, cells, etc. cannot be constituted in accordance with the contents of data recorded on a disk, unless special information on the contents recorded data is provided in real time. Therefore, if the PTT is constituted according to the prior art, PTT information is meaningless to users.

With a view to solve or reduce the above problem, it is an aim of preferred embodiments of the present invention to provide an optical disk recording and reproducing method of recording and reproducing part of title (PTT) information depending on real-time recorded data contents on a rewritable disk.

It is another aim of embodiments of the present invention to provide an optical disk recording and reproducing apparatus for recording and reproducing part of title (PTT) information depending on real-time recorded data contents on a rewritable optical disk.

It is still another aim of the present invention to provide an optical disk recording medium by which a user can randomly access part of title (PTT) information within specific units such as cells or programs for reproduction and recording on a rewritable disk.

According to a first aspect of the invention, there is provided an optical disk recording method of recording audio and/or video data on a rewritable disk in real time, comprising: recording the audio and/or video data in a specific area on the disk; forming a cell with a part of the recorded audio and/or video data; forming a program with the cell; forming a part of title (PTT) with a specific portion of the recorded audio and video data; and recording information on the formed cell, program, and PTT on the disk.

Preferably, the forming of the cell comprises forming a plurality of cells and the forming of the program comprises forming the program with the plurality of cells.

Preferably, the forming of the cell comprises forming the cell based on a recording start and a recording end command from a user.

Preferably, the forming of the program comprises forming the program based on the recorded information on the cell.

Preferably, the forming of the PTT comprises forming the PTT at a regular reproducing time interval with reference to a time for reproducing the cell.

The method may further comprise randomly accessing the PTT within a specific unit of a data structure for reproduction or recording.

Preferably, the specific unit of the data structure for reproduction or recording is the cell.

The specific unit of the data structure for reproduction or recording may be the program.

Preferably, the recording of the audio and/or video data comprises allocation an area on the disk for the recording of the audio and/or video data, recording the audio and/or video data on the rewritable disk in video object units, storing a size of each video object unit and a time for reproducing each video object unit; and the forming of the cell comprises generating the cell with the part of the recorded audio and/or video data using the size of each video object unit and the time for reproducing each video object unit.

Preferably, the forming of the cell, the program, and the PTT comprise generating the cell, the program and the PTT, respectively, based upon inputs received from a user.

Preferably, the forming of the cell, the program, and the PTT comprise generating the cell, the program and the PTT, respectively, arbitrarily.

Preferably, the forming of the program comprises forming the program with the cells which are recorded on a same date.

Preferably, the PTT is recorded at predetermined intervals of a reproducing time, taking into account reproducing times of the cells.

The disk recording method may further comprise: determining whether the recording of the audio and/or video data is completed prior to forming the cell, the program, and the PTT; and forming the cell, the program, and the PTT after determining that the recording of the audio and/or video data is completed.

According to a second aspect of the invention, there is provided an optical disk recording/reproducing method of recording and reproducing audio and/or video data on a rewritable disk, the method comprising: setting a specific position of the audio and/or video data currently being reproduced while the audio and/or video data which has been recorded on the rewritable disk is being reproduced; storing information on the specific position in a separate area of the rewritable disk optical disk; and recording the information on the specific position on the rewritable disk.

Preferably, the information on the specific position includes information on a predetermined unit used during reproduction at the specific position, and information on an offset position within the predetermined unit.

Preferably, the information on the offset position is a reproduction time from a start of the predetermined unit to the specific position.

Preferably, the recording of the information on the specific position occurs after completion of the reproduction of the audio and/or video data.

Preferably, the predetermined unit is a cell for logically dealing with the audio and/or video data.

The optical disk recording/reproducing method may further comprise reading program chain information and starting reproduction of the audio and/or video data using the program chain information, prior to setting of the specific position.

Preferably, the setting of the specific position comprises receiving an input from a user at the specific position of reproduction.

According to a third aspect of the invention, there is provided method of recording audio and/or video data on a rewritable recording medium, comprising: recording the audio and/or video data on the recording medium; forming a cell for logically dealing with the audio and/or video data; forming a part of title pointer including information indicating a specific area in the cell; and recording the cell and the part of title pointer on the recording medium.

The method may further comprise: forming a plurality of cells including the cell, for logically dealing with the audio and/or video data; forming a program with the plurality of cells; and forming title information including a value indicating a number of part of title pointers including the part of title pointer, cell numbers of the cells and offset positions indicating specific area in the corresponding cells.

Preferably, offset positions indicate position from starts of the cells to corresponding specific positions in the cells.

The offset positions may be defined by reproduction times from the start positions to the specific positions of the corresponding cells.

According to another aspect of the invention, there is provided an optical disk recording method for recording audio and video data on a rewritable disk in real time, the method comprising the steps of: recording the audio and video data in a specific area on the disk; and forming a cell with a part of the recorded audio and video data, forming a program with the one or more cells, forming a part of title (PTT) with a specific portion of the recorded audio and video data, and then recording the information on the cell, the program, and the PTT on the disk.

The cell is preferably constituted on the basis of recording start and end commands from a user.

The program is preferably constituted on the basis of the recording data information of the cell.

The PTT may be configured at intervals of a regular reproducing time with reference to the time for reproducing the cells.

Preferably, the PTT within specific units such as the cells or programs used in the data structure for reproduction or recording is randomly accessed.

According to another aspect of the invention, there is provided a disk recording medium which accesses recorded data at predetermined intervals, comprising: cells comprised of part of predetermined data and set as reproduction and recording units; and information on position from the start of the cells to a specific position.

The predetermined units are preferably randomly accessed.

The position from the start of the unit to a specific place is preferably defined as the reproduction time.

According to another aspect of the invention, there is provided an optical disk recording/reproducing apparatus for recording and reproducing audio and video data on a rewritable disk, the apparatus comprising: a key input unit for receiving a command key for recording as a part of title (PTT) at a specific position during recorded audio and video data; and a controller for storing in a separate area PTT information on a specific position under reproduction at the point of time when a command key is input from the key input unit, and recording the reproduction-completed PTT information on the disk.

The information on the specific position is preferably comprised of information on a predetermined unit used during reproduction at the position, and information on an offset position within the unit.

The offset position information is preferably the reproduction time from the start of the predetermined unit to a specific place.

According to another aspect of the invention, there is provided an optical disk reproducing method for reproducing the previous and next units of a specific unit on a rewritable disk in real time, the method comprising the steps of: reading and decoding a video object unit (VOBU) including the specific unit for reproducing prior to reading and decoding other units, when keys for reproducing the previous and next units of a specific unit are input; and displaying the decoding data on a screen when the decoding data arrives at the specific position for reproducing in the specific unit during decoding performed in the above step.

According to another aspect of the invention, there is provided an optical disk recording/reproducing method of recording and reproducing audio and video data on a rewritable disk, the method comprising the steps of: setting a specific position while recorded audio and video data is reproduced; and storing information of the specific position set in the above step in a separate area, and simultaneously reproducing the information and recording the reproduced information on the disk.

The information on the specific position is preferably comprised of information on a predetermined unit used during reproduction at the position, and information on an offset position within the unit.

The offset position information is preferably the reproduction time from the start of the predetermined unit (cell) to a specific place.

According to another aspect of the invention, there is provided an optical recording/reproducing apparatus for recording and reproducing audio and video data on a rewritable disk, the apparatus comprising: a key input unit for inputting commands for reproducing the previous and next data of a specific unit; and a controller for recording on the disk information about a cell comprised of part of the audio and video data, a program comprised of one or more cells, and a part of title (PTT) comprised of a specific portion of the audio and video data, reading and decoding a video object unit (VOBU) including the specific unit for reproducing prior to recording and decoding other units, and displaying the decoding data on a screen when the decoding data arrives at the specific position for reproducing in the specific unit during decoding.

For a better understanding of the invention, and to show how embodiments of the same may be carried into effect, reference will now be made, by way of example, to the accompanying diagrammatic drawings, in which:
Figure 1 is a block diagram illustrating the relationship between a program chain (PGC), programs, cells, and video objects (VOBS) in a DVD ROM video;
Figures 2A and 2B are block diagrams illustrating the relationship between a title and a PGC in a DVD-ROM video;
Figure 3 is a detailed view of a part of title (PTT) search pointer table;
Figure 4 is a detailed view of a PTT search pointer;
Figure 5 is a block diagram of an optical disk recording/reproducing apparatus for providing PTT information, according to an embodiment of the present invention;
Figure 6 is a detailed view of a PTT search pointer according to embodiments of the present invention;
Figure 7 is a flowchart illustrating an optical disk recording method for recording PTT information.
Figure 8 is a flowchart illustrating an optical disk reproducing method for searching PTT information; and
Figure 9 is a flowchart illustrating an optical disk recording method for recording the positions of PTT.

The operation of an optical disk recording/ reproducing apparatus shown in Figure 5 will be described in a recording mode and a reproducing mode, as follows.

In the recording mode, an audio/video (AV) codec 502 compresses and encodes input external audio and video data in predetermined units according to a predetermined compression encoding system, and simultaneously provides information such as the size of audio and video data encoded by the predetermined units, or the time for reproduction. A digital signal processor (DSP) 504 adds additional data for error correction code (ECC) to the data encoded by the AV codec 502, modulates the resultant data, and outputs the result.

An RF amplifier 506 amplifies the data input from the DSP 504 and converts the amplified data into an optical signal. A pick-up unit 508 includes an actuator, and records the output optical signal of the RF amplifier 506 on a disk 509. A servo unit 510 receives information necessary for servo control from the DSP 504 via the RF amplifier 506 and a system controller 512, and performs a stable servo function for the pickup unit 508. The system controller 512 controls the whole system, generates logical information such as programs or cells with respect to data to be recorded, and receives start position information of PTT desired by a user, via a key input unit 514 or generates PTT information using an arbitrary method and controls the received or generated PTT information to be recorded on the disk 509 via the DSP 504, the RF amplifier 506, and the pick-up unit 508.

Meanwhile, in the reproducing mode, the pick-up unit 508 in the reproduction mode reads data stored on the disk 509 and outputs the read data as an optical signal. The RF amplifier 506 converts the optical signal output by the pick-up unit 508 to an electrical signal, extracts modulated data, and generates a servo signal for performing a stable servo function, using the electrical signal. The DSP 504 demodulates the modulated data of the RF amplifier 506, and removes additional data while correcting errors by performing ECC. The servo unit 510 performs a stable servo function using a servo signal generated by the RF amplifier 506. The AV codec 502 decodes audio and video data compressed and coded by the DSP 504. The system controller 512 controls the pick up unit 508, the RF amplifier 506, the DSP 504, and the AV controller 502 according to a command input by a user via the key input unit 514. Particularly, when a command "next/previous PTT" is input, the system controller 512 controls the pick up unit 508, the RF amplifier 506, the DSP 504, and the AV controller 502 to reproduce PTT, corresponding to the input command.

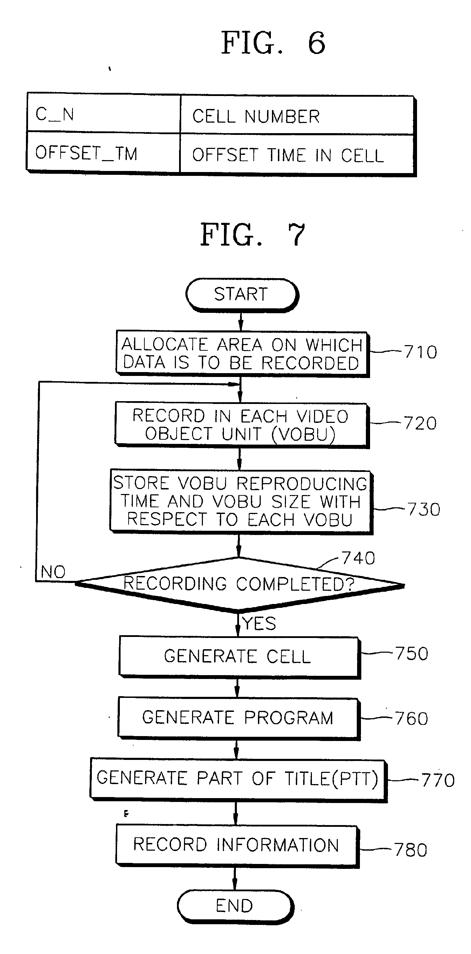

Figure 6 is a detailed view of a PTT search pointer according to the present invention. The PTT search pointer is represented in the PTT search pointer information as shown in Figure 3. The PTT search pointer is comprised of C_N representing a cell number in a program chain (PGC), and OFFSET_TM having reproduction time information from the start position of a cell to a specific position indicated by PTT. Here, the reproduction time information is represented in the form of a hour/minute/second frame on the basis of video data. Thus, PTT is a structure which can designate a specific area in a cell which belongs to the PGC. This is because the configurations of cells and programs in a general optical disk recording/reproducing apparatus are not consistent with the contents of recorded data, and because the configuration of the cells may be too long in some cases.

Accordingly, while the PTT is reproduced, the PTT is randomly accessed within specific units such as the cells and programs used in the data structure for reproduction and recording.

A method of recording PTT information on an optical disk under the control of the system controller 512 of Figure 5 will now be described referring to Figure 7.

In step 710, a physical area on a disk, on which data is to be recorded, is previously allocated to use an area unoccupied by data.

In step 720, input external audio and video data is recorded in video object units (VOBU) constituting a video object (VOB).

In step 730, information such as the size of each of the recorded VOBU and the time for reproducing the VOBU is stored in a special memory.

In step 740, it is determined whether recording is completed.

When all recording is completed, a cell is formed with a part of audio and video data using the information such as the size and the reproducing time of the VOBU stored in the special memory, in step 750. A program is generated with one or more cells in step 760, and a PTT is generated with a specific portion of the audio and video data in step 770.

As a consequence, the cell, the program, and the PTT information are recorded on a disk in step 780.

The program, the cell and the PTT information can be constituted by being individually received from a user, but generally they are arbitrarily constituted in a disk recording apparatus to avoid inconvenience to users and to save time. The cell can be formed in various cases. For example, the cell can be comprised of the start and end of a recording command input by a user via the key input unit 514 of Figure 5. The program also can be constituted in various cases. For example, the program can be comprised of cells recorded on the same date. The PTT information includes the contents of Figures 3 and 6, and can be configured at intervals of a predetermined reproducing time in consideration of the time for reproducing the configured cells.

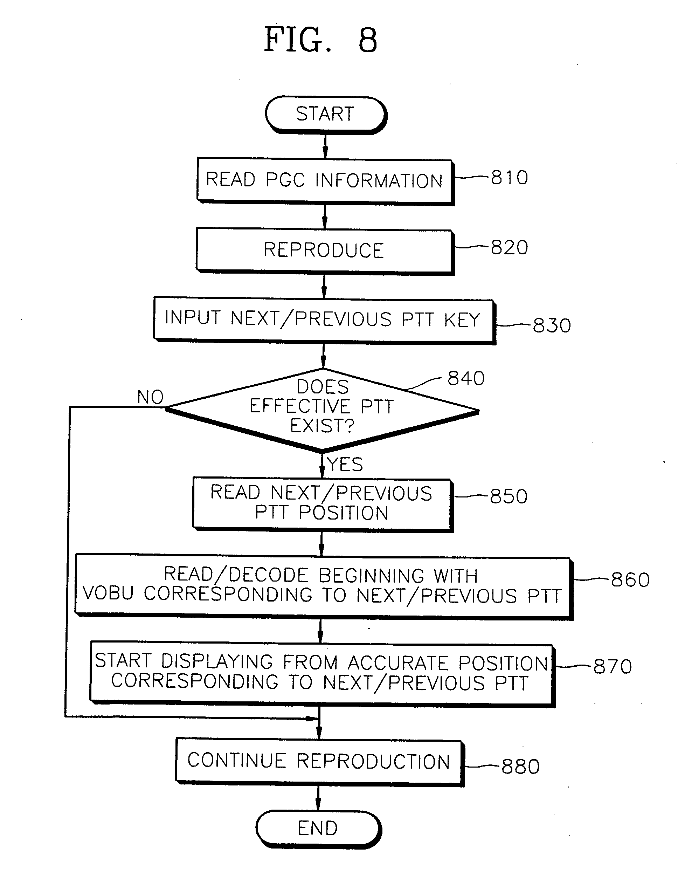

A PTT searching process performed by the system controller 512 of Figure 5 during reproduction of an optical disk will now be described referring to Figure 8.

First, the system controller 512 reads PGC information from a memory (not shown) to receive a user command from a user interface and start reproduction, in step 810. An optical disk is reproduced using the PGC information in step 820.

When a "next/previous PTT" command key is input by a user during reproduction of the optical disk in step 830, existence of effective PTT information is checked in step 840. This is because while the last or first PTT in a current PGC is being reproduced, PTT information corresponding to the next/previous PTT command cannot be dealt with.

If there exists effective PTT, the next/previous PTT position information as shown in Figure 6 is read, in step 850. In step 860, a VOBU, being the minimum unit in recording, corresponding to the next/previous PTT is read and decoded first.

Here, the position of the next/previous PTT is not generally consistent with the position of the VOBU. Accordingly, when the position of the VOBU becomes a accurately desired PTT position, the decoded data is displayed on a screen, in step 870. Reproduction continues in step 880.

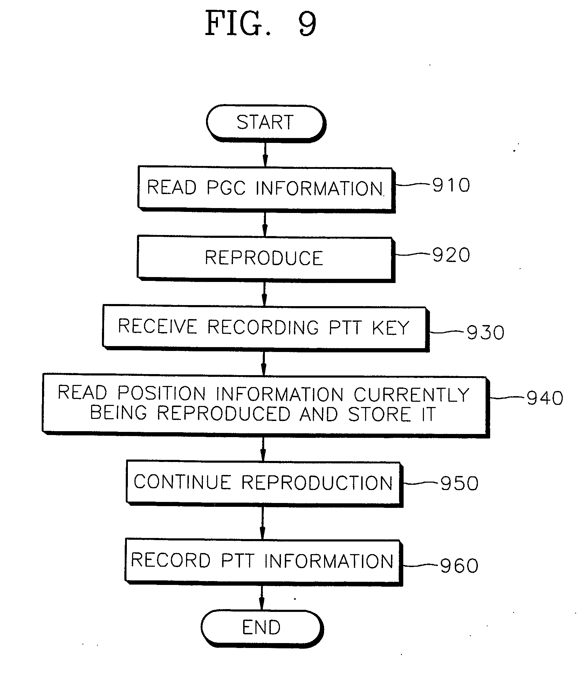

A PTT position recording method by the system controller 512 of Figure 5 will now be described referring to Figure 9.

First, when reproduction through a user interface with a user starts, the system controller 512 reads PGC information from a memory (not shown), in step 910. Then, an optical disk is reproduced using the PGC information in step 920.

When a user inputs a recording PTT key during reproduction in step 930, a position, currently being reproduced at the point of time when the key is input, is understood as the cell number in the PGC and the offset reproducing time information in the cell as shown in Figure 6, referring to the PGC information, and stored in a separate memory (not shown), in step 940. Reproduction continues in step 950. After the reproduction is completed, stored PTT information is recorded on the optical disk, in step 960.

According to embodiments of the present invention, audio and video data can be recorded/reproduced on/from a rewritable optical disk in real time by providing PTT information that is consistent with recorded data contents. Also, a user can randomly access a PTT within specific units for reproduction and recording.

The reader's attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings), may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. An optical disk recording method of recording audio and/or video data on a rewritable disk in real time, comprising:
recording the audio and/or video data in a specific area on the disk;
forming a cell with a part of the recorded audio and/or video data;
forming a program with the cell;
forming a part of title (PTT) with a specific portion of the recorded audio and video data; and
recording information on the formed cell, program, and PTT on the disk.

2. The disk recording method as claimed in claim 1, wherein the forming of the cell comprises forming a plurality of cells and the forming of the program comprises forming the program with the plurality of cells.

3. The disk recording method as claimed in claim 1, wherein the forming of the cell comprises forming the cell based on a recording start and a recording end command from a user.

4. The disk recording method as claimed in claim 1, wherein the forming of the program comprises forming the program based on the recorded information on the cell.

5. The disk recording method as claimed in claim 1, wherein the forming of the PTT comprises forming the PTT at a regular reproducing time interval with reference to a time for reproducing the cell.

6. The disk recording method as claimed in claim 5, further comprising randomly accessing the PTT within a specific unit of a data structure for reproduction or recording.

7. The disk recording method as claimed in claim 6, wherein the specific unit of the data structure for reproduction or recording is the cell.

8. The disk recording method as claimed in claim 6, wherein the specific unit of the data structure for reproduction or recording is the program.

9. The disk recording method as claimed in claim 1, wherein:
the recording of the audio and/or video data comprises allocation an area on the disk for the recording of the audio and/or video data, recording the audio and/or video data on the rewritable disk in video object units, storing a size of each video object unit and a time for reproducing each video object unit; and
the forming of the cell comprises generating the cell with the part of the recorded audio and/or video data using the size of each video object unit and the time for reproducing each video object unit.

10. The disk recording method as claimed in claim 1, wherein the forming of the cell, the program, and the PTT comprise generating the cell, the program and the PTT, respectively, based upon inputs received from a user.

11. The disk recording method as claimed in claim 1, wherein the forming of the cell, the program, and the PTT comprise generating the cell, the program and the PTT, respectively, arbitrarily.

12. The disk recording method as claimed in claim 2, wherein the forming of the program comprises forming the program with the cells which are recorded on a same date.

13. The disk recording method as claimed in claim 2, wherein the PTT is recorded at predetermined intervals of a reproducing time, taking into account reproducing times of the cells.

14. The disk recording method as claimed in claim 1, further comprising:
determining whether the recording of the audio and/or video data is completed prior to forming the cell, the program, and the PTT; and
forming the cell, the program, and the PTT after determining that the recording of the audio and/or video data is completed.

15. An optical disk recording/reproducing method of recording and reproducing audio and/or video data on a rewritable disk, the method comprising:
setting a specific position of the audio and/or video data currently being reproduced while the audio and/or video data which has been recorded on the rewritable disk is being reproduced;
storing information on the specific position in a separate area of the rewritable disk optical disk; and
recording the information on the specific position on the rewritable disk.

16. The optical disk recording/reproducing method as claimed in claim 15, wherein the information on the specific position includes information on a predetermined unit used during reproduction at the specific position, and information on an offset position within the predetermined unit.

17. The optical disk recording/reproducing method as claimed in claim 16, wherein the information on the offset position is a reproduction time from a start of the predetermined unit to the specific position.

18. The optical disk recording/reproducing method as claimed in claim 15, wherein the recording of the information on the specific position occurs after completion of the reproduction of the audio and/or video data.

19. The optical disk recording/reproducing method as claimed in claim 16, wherein the predetermined unit is a cell for logically dealing with the audio and/or video data.

20. The optical disk recording/reproducing method as claimed in claim 16, further comprising
reading program chain information and starting reproduction of the audio and/or video data using the program chain information, prior to setting of the specific position.

21. The optical disk recording/reproducing method as claimed in claim 17, wherein the setting of the specific position comprises receiving an input from a user at the specific position of reproduction.

22. A method of recording audio and/or video data on a rewritable recording medium, comprising:
recording the audio and/or video data on the recording medium;
forming a cell for logically dealing with the audio and/or video data;
forming a part of title pointer including information indicating a specific area in the cell; and
recording the cell and the part of title pointer on the recording medium.

23. The method as claimed in claim 22, further comprising:
forming a plurality of cells including the cell, for logically dealing with the audio and/or video data;
forming a program with the plurality of cells; and
forming title information including a value indicating a number of part of title pointers including the part of title pointer, cell numbers of the cells and offset positions indicating specific area in the corresponding cells.

24. The method as claimed in claim 23, wherein the offset positions indicate position from starts of the cells to corresponding specific positions in the cells.

25. The method as claimed in claim 24, wherein the offset positions are defined by reproduction times from the start positions to the specific positions of the corresponding cells.
